# EUROPEAN PATENT APPLICATION

(11) **EP 1 471 523 A1**
(43) Date of publication of application: **27.10.2004**
(21) Application number: 03734882.8
(22) Date of filing: 30.01.2003
(51) Int. Cl.: G11B 20/10

(54) **RECORDING APPARATUS AND RECORDING MEDIUM**

(30) Priority: 31.01.2002 JP 2002023060; 04.03.2002 JP 2002056981
(71) Applicant: MATSUSHITA ELECTRIC INDUSTRIAL CO., LTD., Kadoma-shi, Osaka 571-8501 (JP)
(72) Inventor: IKEDA, Takumi, Kobe-shi, Hyogo 651-0053 (JP)
(74) Representative: Grünecker, Kinkeldey, Stockmair & Schwanhäusser Anwaltssozietät
(86) International application number: PCT/JP2003/000879
(87) International publication number: WO 2003/065366

(57) **Abstract**

The present invention provides a recording system having a recording medium on which copyright processing judging information is previously recorded and having a recording apparatus for recording a content on the recording medium. The recording apparatus acquires copyright processing information related to copyright processing recorded on the recording medium and performs recording processing to determine whether or not to record the content based on the copyright processing information. Thus, a copyright royalty can be charged for the recording medium, and appropriate copyright protection is performed.

## Description

### TECHNICAL FIELD

The present invention relates to a recording apparatus and recording medium for protecting copyright.

### BACKGROUND ART

A broadband infrastructure has been recently developed. With this development, contents have been delivered through a network in addition to conventional physical medium (a tape, a compact disk (CD), or a digital versatile disk (DVD)), a television broadcast, a radio broadcast, and a movie. When continuous connection environment by a broadband becomes established, it is expected that the amount of digital contents delivered through a network increases and chance that a person produces contents increases. In addition to conventional producing companies of a movie or music and broadcast stations, network connection agencies move into content delivery business.

When digital contents are delivered through a network, the rule for protection of copyright of a content holder against illegal copy is not established. Therefore, a content deliverer generally performs batch copyright processing similarly to the conventional manner.

In the present situation where the deliverer of the digital contents performs right processing of his/her work, it is foreseen that measures are hardly taken. Especially, the Internet presently becomes widespread, so that appropriate copyright protection is difficult in the network delivery of the contents.

### DISCLOSURE OF THE INVENTION

The present invention provides a recording apparatus for recording a content on a recording medium. The recording apparatus acquires copyright processing information, namely information related to copyright processing recorded on the recording medium, and determines whether to record the content based on the copyright processing information.

### BRIEF DESCRIPTION OF THE DRAWINGS

Fig. 1 is a schematic diagram of a recording system in accordance with exemplary embodiment 1 of the present invention.
Fig. 2 is a block diagram of a configuration of a recording apparatus in accordance with exemplary embodiment 1.
Fig. 3 is a flowchart of operations of the recording apparatus in accordance with exemplary embodiment 1.
Fig. 4 is a diagram of an example of copyright processing information recorded on a recording medium in accordance with exemplary embodiment 1.
Fig. 5 is a block diagram of a configuration of a recording apparatus in accordance with exemplary embodiment 2.
Fig. 6 is a flowchart of operations of the recording apparatus in accordance with exemplary embodiment 2.
Fig. 7 shows a display example of an error message panel in accordance with exemplary embodiment 2.
Fig. 8 is a block diagram of a transmitting/receiving system in accordance with exemplary embodiment 3.
Fig. 9 is a diagram of data example of contents and copyright processing information in pairs in accordance with exemplary embodiment 3.
Fig. 10 is a flowchart of operations of a receiver in accordance with exemplary embodiment 3.
Fig. 11 is a diagram of an example of copyright processing information recorded on a recording medium in accordance with exemplary embodiment 3.
Fig. 12 is a block diagram of a configuration of a recording system in accordance with exemplary embodiment 4.
Fig. 13 is a flowchart of operations of the recording apparatus in accordance with exemplary embodiment 4.
Fig. 14 is a flowchart of operations of the recording apparatus in accordance with exemplary embodiment 4.
Fig. 15 shows a display example of a panel in accordance with exemplary embodiment 4.
Fig. 16 is a flowchart of operations of a server apparatus in accordance with exemplary embodiment 4.
Fig. 17 is another flowchart of operations of the recording apparatus in accordance with exemplary embodiment 4.
Fig. 18 is a block diagram of a configuration of a recording system in accordance with exemplary embodiment 5.
Fig. 19 is a flowchart of operations of an accounting processor in accordance with exemplary embodiment 5.
Fig. 20 is a diagram showing a copyright processing panel in accordance with exemplary embodiment 5.
Fig. 21 is another diagram showing the copyright processing panel in accordance with exemplary embodiment 5.
Fig. 22 is a diagram of an example of input information in accordance with exemplary embodiment 5.
Fig. 23 is a diagram showing a structure of the input information in accordance with exemplary embodiment 5.
Fig. 24 is another diagram showing the structure of the input information in accordance with exemplary embodiment 5.
Fig. 25 is an accounting fee determining table in accordance with exemplary embodiment 5.
Fig. 26 is a diagram showing an example of result information in accordance with exemplary embodiment 5.
Fig. 27 is a diagram showing a result processing panel in accordance with exemplary embodiment 5.
Fig. 28 is a diagram showing another example of result information in accordance with exemplary embodiment 5.
Fig. 29 is a diagram showing an error panel in accordance with exemplary embodiment 5.

### DETAILED DESCRIPTION OF PREFERRED EMBODIMENTS

Recording systems having a recording apparatus of exemplary embodiments are described with reference to drawings. Elements denoted with the same reference numbers perform similar operations, and the re-descriptions of those elements are omitted.

### (Exemplary embodiment 1)

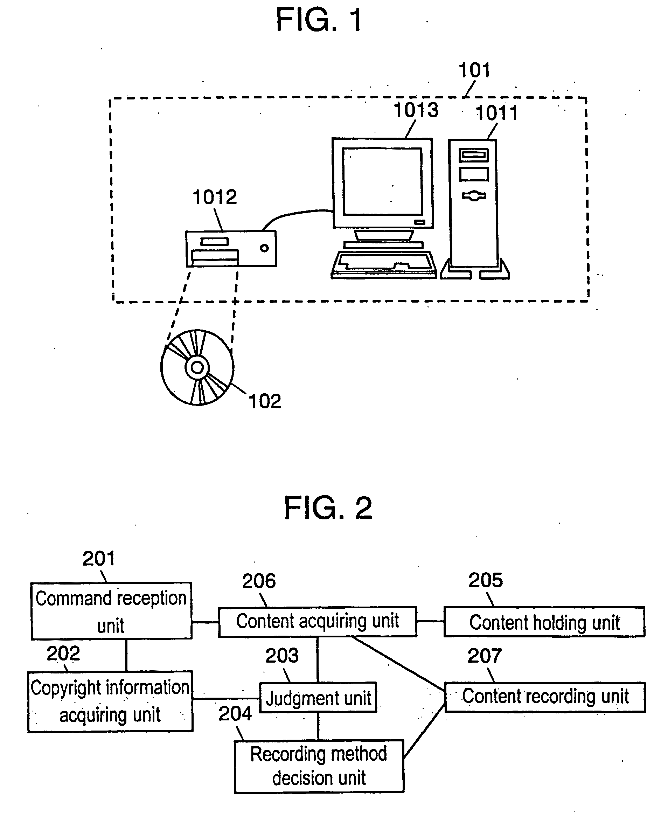

Fig. 1 is a schematic diagram of a recording system having a recording apparatus and a recording medium in accordance with exemplary embodiment 1 of the present invention.

The recording system of exemplary embodiment 1 has recording apparatus 101 and recording medium 102. Recording apparatus 101 records a content on recording medium 102. The content may be called data or information. Here, the content mainly means data of which copyright is protected, for example, video such as a movie, voice data, and music data such as melody.

Recording medium 102 is a medium capable of recording a content. Recording medium 102 may be any medium capable of recording the content, and hence may be a recordable optical disk, a rewritable optical disk, a floppy disk, a semiconductor memory (also including an attachable/detachable memory from the recording apparatus), or a hard disk.

Recording apparatus 101 has computer body 1011, drive 1012 of the recording medium, and display 1013. Computer body 1011 and drive 1012 of the recording medium execute the processing of recording the content on recording medium 102. Display 1013 is required for a user to input a content copy command, but is not absolutely necessary.

Recording apparatus 101 is generally formed of computer body 1011 and drive 1012 of the recording medium, but may be a dedicated machine (for example, an integrated machine) for copying the content to recording medium 102.

Computer body 1011 includes a memory for storing the content, a read only memory (ROM) that stores a program for performing a control of a recording command or the like in drive 1012, and a central processing unit (CPU) for reading the program from the ROM and executing it. Computer body 1011 has a typical configuration, and hence is not shown.

Fig. 2 is a block diagram of a configuration of recording apparatus 101 in accordance with exemplary embodiment 1.

Recording apparatus 101 has command reception unit 201, copyright information acquiring unit 202, judgment unit 203, recording method decision unit 204, content holding unit 205, content acquiring unit 206, and content recording unit 207.

Command reception unit 201 receives a recording command having a content identifier for identifying a content and a recording medium identifier for identifying a recording medium. Command reception unit 201 can be formed of driver software or the like for receiving an input from a user with a keyboard or a mouse. In a case that the command is transmitted via the network for example, command reception unit 201 is a modem and its driver software. In a case that the command is transmitted in a broadcast for example, command reception unit 201 is a tuner and its driver software. In a case that the command is transmitted by infrared remote control, command reception unit 201 is an infrared receiver and its driver software.

Copyright information acquiring unit 202 acquires copyright processing information related to copyright processing. Here, the copyright processing is stored on the recording medium identified by the recording medium identifier received by command reception unit 201. The copyright processing information is information indicating that some measures related to the copyright are taken. For example, the copyright processing information indicates that a content charging for copy or output or a chargeable content can be copied, moved, or output (watched or listened). Existence of the copyright processing information on recording medium 102 indicates that the content charging for copy may be copied to the recording medium.

Copyright information acquiring unit 202 is generally formed of software and the CPU. This software is generally stored in the ROM or the like. The acquirement of the copyright processing information includes temporary reading.

Judgment unit 203 determines whether or not copyright information acquiring unit 202 has acquired copyright information. Judgment unit 203 can be generally formed of software and the CPU. This software is generally stored in the ROM or the like.

Recording method decision unit 204 determines a recording method of a content based on a judgment result of judgment unit 203. Recording method decision unit 204 can be generally formed of software and the CPU. This software is generally stored in the ROM or the like.

Content holding unit 205 holds one or more contents. Content holding unit 205 may be any medium such as a hard disk, semiconductor memory, or optical disk capable of storing the content. Content holding unit 205 may temporarily record a content. The content held by content holding unit 205 may be a content transmitted in a broadcast, a content transmitted by communications, or a content stored on a recording medium such as a compact disk (CD)-ROM. These elements are similar to each other in all embodiments.

Content acquiring unit 206 acquires the content stored in content holding unit 205. Content acquiring unit 206 can be generally formed of software and the CPU. This software is generally stored in the ROM or the like.

Content recording unit 207, based on the determination by recording method decision unit 204, records the content acquired by content acquiring unit 206. Content recording unit 207 can be generally formed of software and the CPU. This software is generally stored in the ROM or the like.

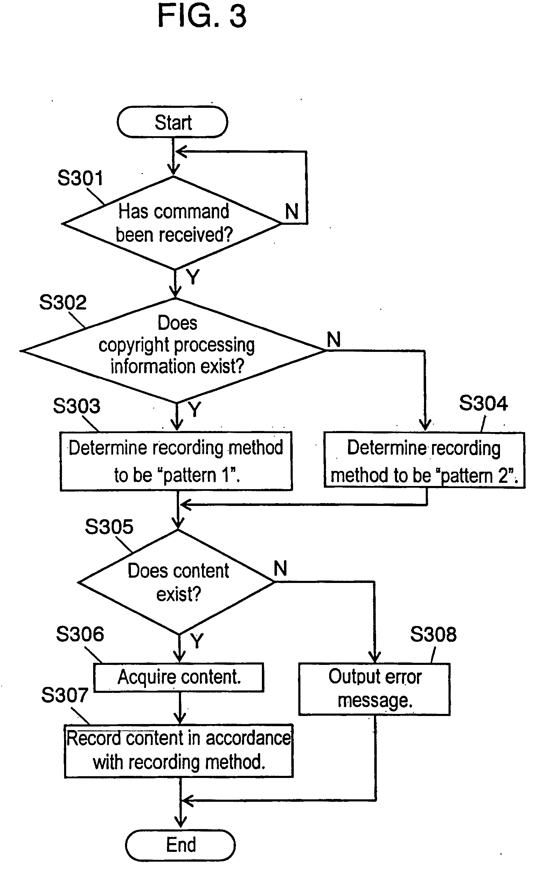

Operations of recording apparatus 101 for copying a content to recording medium 102 are described with reference to the flowchart (Fig. 3).
(Step S301) Recording apparatus 101 determines whether or not command reception unit 201 has received a recording command. If command reception unit 201 has received the command, the process goes to step S302. If command reception unit 201 has not received the command, the process returns to step S301.
(Step S302) Copyright information acquiring unit 202 acquires copyright processing information (always cannot acquire it), and judgment unit 203 determines whether or not the copyright processing information is recorded on recording medium 102. If the information is recorded, the process goes to step S303. If the information is not recorded, the process goes to step S304.
(Step S303) Recording method decision unit 204 determines the recording method to be "pattern 1".
(Step S304) Recording method decision unit 204 determines the recording method to be "pattern 2".
(Step S305) Content acquiring unit 206 determines whether or not the content identified by the content identifier in the command received by command reception unit 201 exists. If the content exists, the process goes to step S306. If the content does not exist, the process jumps to step S308.
(Step S306) Content acquiring unit 206 acquires, from holding unit 205, the content identified by the content identifier existing in the command received by command reception unit 201.
(Step S307) Content recording unit 307 records the content on the recording medium according to the recording method ("pattern 1" or "pattern 2").
(Step S308) An error message indicating nonexistence of the content to be copied is output.

The operations of recording apparatus 101 have been described. Specific operations of recording apparatus 101 are described hereinafter.

It is assumed that a user inputs the command "copy content 1 to recording medium A". This command means that content 1 is copied to recording medium A.

A first operation example in this case is described hereinafter. Recording apparatus 101 determines whether or not recording medium A holds copyright processing information. Recording apparatus 101, on determining that recording medium A holds the information, reads content 1, and copies content 1 to recording medium A. If recording medium A does not hold copyright processing information, recording apparatus 101 does not copy content 1 to recording medium A.

In other words, the recording method "pattern 1" indicates a simple copy. The recording method "pattern 2" indicates that nothing is operated, namely "nop (no operation)".

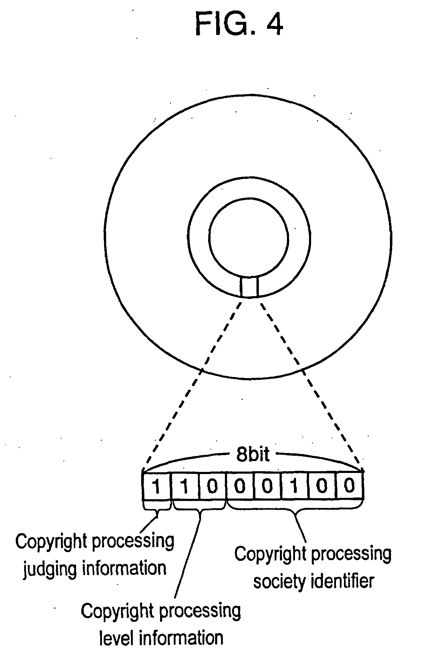

Fig. 4 shows an example of the copyright processing information recorded on recording medium A. Recording medium A is a rewritable optical disk (DVD or the like), for example. The copyright processing information is stored in a region called "R-Information area" in a DVD-R (recordable), for example. Here, "R-Information area" is an example into which the copyright processing information is written, and may be the other region. The region into which the copyright processing information is written is preferably a separate region distinguishable from the region into which the content is written. As an example of the separate region, there is a region such as "R-Information area" prepared for the record managing information required for the recording apparatus.

The copyright processing information is 8 bits of information for example, and the first bit indicates copyright processing judging information. The copyright processing judging information indicates whether or not the copyright processing information is recorded. When the copyright processing judging information is "1", the copyright processing information is recorded on recording medium A. This indicates that copyright processing is applied to recording medium A and the content can be copied. When the copyright processing judging information is "0", the copyright processing information is not recorded on recording medium A. This indicates that copyright processing is not applied to recording medium A and the content cannot be copied.

Next two bits (second bit and third bit) of the copyright processing information indicate copyright processing level information. The copyright processing level information indicates what copyright processing is applied to recording medium A. A content capable of being copied to recording medium A and the copying method depend on the copyright processing level information. The control is performed by recording apparatus 101. The detail of the processing will be described in embodiment 2.

Next five bits (fourth to eighth bits) of the copyright processing information indicate a copyright processing society identifier. This identifier is information used for identifying a group for performing the copyright processing. This group includes a group for performing copyright management or accounting. The copyright processing society identifier indicates a group authorized to copy a content to recording medium A.

The copyright processing society identifier is used as follows, for example. When the identifier is "00001" (indicating a music copyright society), the identifier indicates that a society which manages music copyright has performed the copyright processing, and music data (e.g. WAV file) is recorded on the recording medium based on the copyright processing judging information and the copyright processing level. Data (e.g. movie content) other than the music data is judged not to be copyright-processed and cannot be recorded on the recording medium.

When the copyright processing society identifier is "00010" (indicating a movie copyright society), the identifier indicates that a society which manages movie copyright has performed the copyright processing, and movie data (e.g. motion picture experts group (MPEG) file) is recorded on the recording medium based on the copyright processing judging information and the copyright processing level. Data (e.g. music content) other than the movie data is judged not to be copyright-processed and cannot be recorded on the recording medium.

The following consideration is allowed. When the copyright processing society identifier is "00011", the identifier indicates that authorization from the music copyright society and the movie copyright society is issued, and the movie and the music can be recorded on the recording medium. The last bit of the copyright processing society identifier indicates the existence of the recording authorization by "movie copyright society", and the second last bit indicates the existence of the recording authorization by "music copyright society".

The example of the copyright processing information has been described; however the present invention is not limited to this example. In other words, the copyright processing information may include only the copyright processing judging information, or may include information other than the information discussed above.

A second operation example of recording apparatus 101 is described hereinafter. Similarly to the first example, it is assumed that a user inputs the command "copy content 1 to recording medium A". Recording apparatus 101 determines whether or not recording medium A holds copyright processing information. Recording apparatus 101, on determining that recording medium A holds the information, reads content 1, and simply copies the whole of content 1 to recording medium A. Recording apparatus 101, on determining that recording medium A does not hold copyright processing information, reads content 1 and simply copies part of content 1 to recording medium A. In other words, the recording method "pattern 1" indicates copy of all content, and the recording method "pattern 2" indicates copy of part of the content. When the content is a movie or the like including a motion picture and a voice, it is preferable that the part of the content means first 30 seconds of information of the content, for example. In this case, a promotion effect is produced by employing the recording method "pattern 2". Here, the recording method "pattern 2" may be a method of copying arbitrary part of the content. Additionally, the recording method "pattern 2" may be a method of copying part of the content such as a plurality of discrete fields, or a method of copying only the voice of the content including the motion picture and the voice. In the former method, the discrete fields may be acquired from the content at a certain interval or at an arbitrary interval. The recording method "pattern 2" may be a method of extracting and recording data for the promotion when partial data used for the promotion in the content is expressed. The partial data used for the promotion is considered to be expressed by inserting attribute information (tag) on start and finish of the promotion into the content. Here, as the expressing method, any method in which a computer or the like indicates a position of the promotion information in the content may be employed, and the expressing method is not limited to the tag.

A third operation example of recording apparatus 101 is described hereinafter. Similarly to the examples discussed above, it is assumed that a user inputs the command "copy content 1 to recording medium A". Recording apparatus 101 determines whether or not recording medium A holds copyright processing information. Recording apparatus 101, on determining that recording medium A holds the information, reads content 1 and simply copies the whole of content 1 to recording medium A. Recording apparatus 101, on determining that recording medium A does not hold copyright processing information, reads content 1 and encrypts content 1 in a predetermined method. Recording apparatus 101 records encrypted content 1 on recording medium A.

In embodiment 1, the determination whether or not to copy the content to the recording medium depends on whether or not the copyright processing information is recorded on the recording medium to which the content is copied.

When the content is copied to the recording medium, the copying method of the content depends on whether or not the copyright processing information is recorded on the recording medium to which the content is copied. In this processing, a mechanism of protecting a copyright holder can be built in the recording medium. Specifically, a manufacturer or seller of the recording medium previously pays part of the selling price of the recording medium to the copyright holder or a copyright protecting group, and the copyright processing information is recorded on the recording medium as an alternative to it. The recording medium previously holding the copyright processing information is communicated to a market. The recording apparatus is authorized to copy or move the content to only the recording medium that previously holds the copyright processing information, thereby allowing appropriate copyright processing.

The recording medium previously holding the copyright processing information is a rewritable optical disk in embodiment 1; however, the recording medium may be any recording medium capable of recording the information, for example a magnetic disk such as a hard disk or a floppy disk, a recordable optical disk, or a portable semiconductor memory.

The input of the content copy command from a user has been described in the command input section; however, the input of the command may be performed by a mouse or a remote controller. The command may be transmitted through a network or broadcast, and the recording apparatus may receive the command and perform the recording processing.

The operations discussed above (especially, operations described in the flowchart of Fig. 3) may be realized by a computer readable program. The program may be delivered in a recorded state on the recording medium such as a CD-ROM, may be delivered by network delivery, or may be delivered in a broadcast.

In embodiment 1, command reception unit 201 is not absolutely necessary, but the recording apparatus may automatically execute the predetermined command.

Content holding unit 205 may hold a plurality of contents or only one content. When content holding unit 205 holds only one content, content acquiring unit 206 acquires the determined content.

The copy of the content is described in embodiment 1; however, similar processing may be performed for moving the content.

The command includes a medium identifier for identifying a medium in embodiment 1; however, the command may have no medium identifier. In this case, the content is copied or moved to the predetermined medium.

### (Exemplary embodiment 2)

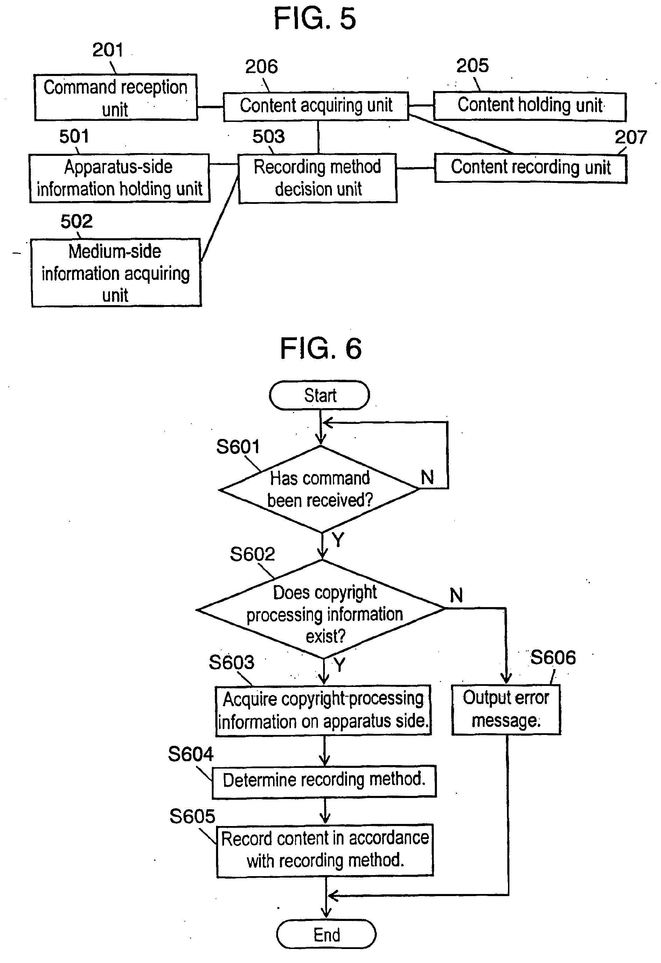

Fig. 5 is a block diagram of a recording apparatus in accordance with exemplary embodiment 2 of the present invention.

The recording apparatus has command reception unit 201, content holding unit 205, content acquiring unit 206, content recording unit 207, apparatus-side information holding unit 501, medium-side information acquiring unit 502, and recording method decision unit 503.

Apparatus-side information holding unit 501 holds copyright processing information on the apparatus side. This copyright processing information corresponds to a copied or moved content. The copyright processing information may be held together with the content in a pair, or only one piece of information may be held. When only one piece of information is held on the recording apparatus, the same information corresponds to all contents held by recording apparatus.

Apparatus-side information holding unit 501 may be any medium capable of storing a content, such as a hard disk, a semiconductor memory, or an optical disk.

Medium-side information acquiring unit 502 acquires copyright processing information recorded on the recording medium, and performs operations similar to those of copyright information acquiring unit 202.

Recording method decision unit 503 determines a recording method of a content based on the copyright processing information held by apparatus-side information holding unit 501 and the copyright processing information acquired by medium-side information acquiring unit 502. Recording method decision unit 503 can be generally formed of software and the CPU. This software is generally stored in the ROM or the like.

Operations of the recording apparatus for copying a content to the recording medium are described with reference to the flowchart (Fig. 6).
(Step S601) The recording apparatus determines whether or not command reception unit 201 has received a recording command. If command reception unit 201 has received the command, the process goes to step S602. If command reception unit 201 has not received the command, the process returns to step S601.
(Step S602) Medium-side information acquiring unit 502 tries to acquire copyright processing information from the recording medium, and determines whether or not it can acquire the copyright processing information. If the information can be acquired, the process goes to step S603. If the information cannot be acquired, the process jumps to step S606. If the copyright processing information can be acquired in this step, the copyright processing information is acquired.
(Step S603) Recording method decision unit 503 acquires copyright processing information on the apparatus side held by apparatus-side information holding unit 501. In this description, it is assumed that there is only one piece of copyright processing information on the apparatus side and the copyright processing information is common to all contents.
(Step S604) Recording method decision unit 503 determines a recording method of the content based on the copyright processing information acquired by medium-side information acquiring unit 502 in step S602 and the copyright processing information on the apparatus side acquired in step S603.
(Step S605) Content recording unit 207 records the content on the recording medium in the content recording method determined in step S604.
(Step S606) An error message indicating that the content cannot be recorded is output to the specified recording medium. The error message is generally previously stored in the recording apparatus, but may be stored into the recording apparatus from the outside by a means such as a network, a broadcast, or a recording medium.

The operations of the recording apparatus of embodiment 2 have been described. Specific operations of the recording apparatus are described hereinafter.

It is assumed that a user inputs the command "copy content 2". This command means that content 2 is copied to the recording medium. The command includes no information for identifying a recording medium, so that the content is always copied or moved to the same recording medium in this example.

A first operation example in this case is described hereinafter. The recording apparatus determines whether or not the recording medium holds copyright processing information. When the recording apparatus determines that the recording medium holds the information, recording' method decision unit 503 acquires copyright processing information on the apparatus side held by apparatus-side information holding unit 501. When there is a certain relation between the copyright processing information on the medium side and the copyright processing information on the apparatus side, recording method decision unit 503 copies content 2 to the recording medium. In this copy, content 2 is simply copied to the recording medium. When there is no certain relation between the copyright processing information on the medium side and that on the apparatus side, the copy of the content is not performed. The certain relation means matching relation between information on both sides, for example. The certain relation may mean the other predetermined relation. It may be determined whether or not there is the certain relation, for example using the copyright processing level information described in embodiment 1. The copyright processing level information specifically indicates which level of content can be stored. In this case, comparing with the copyright processing level information previously recorded on the recording medium is performed, and, when value not more than the value indicated by "copyright processing level information" is copyright processing information (or part of the copyright processing information) corresponding to the content, the copy to the recording medium is authorized. In other words, when "content copyright processing level information on the recording medium ≥ copyright processing information (or part of the copyright processing information)" is established, the recording apparatus records the content on the recording medium.

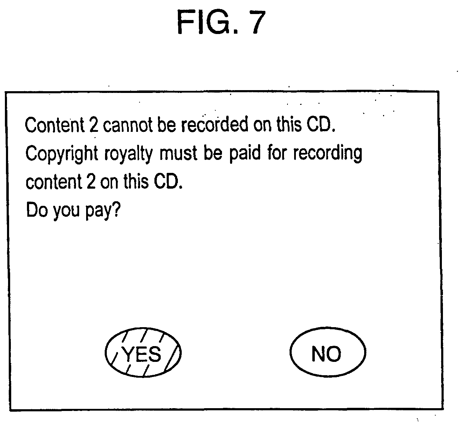

When the recording medium does not hold the copyright processing information, the recording apparatus does not copy content 2 to the recording medium but outputs a panel including the error message shown in Fig. 7. Here, the error message may include only information indicating the error. Detail operations after a button in Fig. 7 is pushed down will be described in the other embodiment.

A second operation example in the case discussed above is described hereinafter. The recording apparatus determines whether or not the recording medium holds copyright processing information. When the recording apparatus determines that the recording medium holds the copyright processing information, recording method decision unit 503 acquires copyright processing information on the apparatus side held by apparatus-side information holding unit 501. When there is a certain relation between the copyright processing information on the medium side and the copyright processing information on the apparatus side, recording method decision unit 503 copies content 2 to the recording medium. In this copy, content 2 is simply copied to the recording medium. When there is no certain relation between the copyright processing information on the medium side and that on the apparatus side, part of content 2 is copied to the recording medium. The part of content 2 may take various forms as discussed in embodiment 1.

A third operation example in the case discussed above is described hereinafter. When the recording apparatus determines that the recording medium holds the copyright processing information, and there is a certain relation between the copyright processing information on the medium side and the copyright processing information on the apparatus side, the recording apparatus simply copies content 2 to the recording medium. When there is no certain relation between the copyright processing information on the medium side and that on the apparatus side, the recording apparatus encrypts content 2 and copies encrypted content 2 to the recording medium.

In embodiment 2, the normal copy is authorized only when there is the certain relation between the copyright processing information of the recording medium and the copyright processing information held by the recording apparatus, so that the copyright processing can be appropriately performed.

One piece of copyright processing information is held by the recording apparatus and hence the common copyright processing information corresponds to all contents held by the recording apparatus in embodiment 2; however, the recording apparatus may manage copyright processing information every content.

For managing the copyright processing information every content, the recording apparatus may hold the copyright information every content identifier for identifying the content, or may hold the copyright information every kind of the content. The kinds of the contents include music data (e.g. WAV file), text data, motion picture data, multimedia data such as MPEG, groups divided based on the information indicating an owner of the content, groups divided based on the content size, or groups divided based on the content attribute value.

For managing the copyright processing information every content, the recording apparatus determines whether or not to copy a content as a copied object based on the copyright processing information of the content and the copyright processing information of the recording medium, or determines a copying method.

For holding the copyright information every kind of the content, the recording apparatus determines whether or not to copy the content as the copied object based on the copyright processing information of the kind of the content and the copyright processing information of the recording medium, or determines a copying method.

The operations discussed above (especially, operations described in the flowchart of Fig. 6) may be realized by a computer readable program. The program may be delivered in a recorded state on the recording medium such as a CD-ROM, may be delivered by network delivery, or may be delivered in a broadcast.

The copy of the content is described in embodiment 2; however, similar processing may be performed in moving the content.

### (Exemplary embodiment 3)

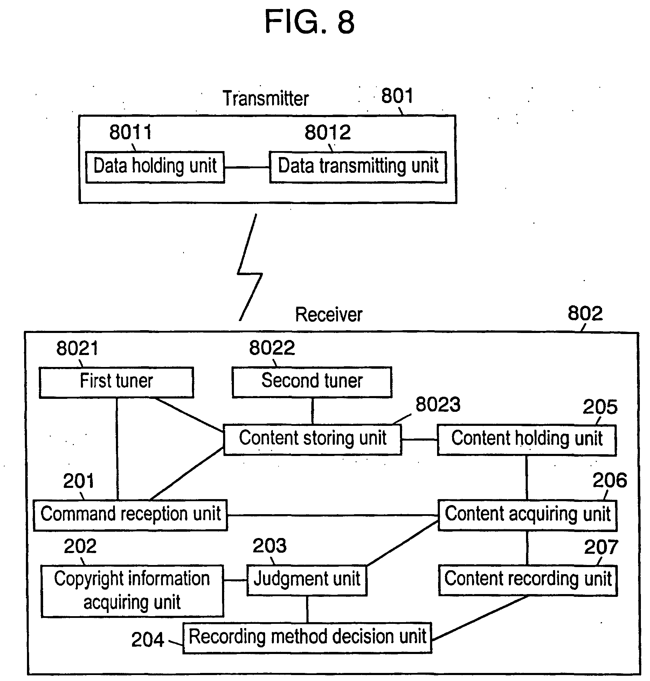

Fig. 8 is a block diagram of a transmitting/receiving system in accordance with exemplary embodiment 3. The transmitting/receiving system has transmitter 801 and receiver 802. Here, the transmission may be one-to-many data transmission such as a broadcast, or may be one-to-one data transmission using a network.

Transmitter 801 has data holding unit 8011 and data transmitting unit 8012. Data holding unit 8011 holds one or more sets of data groups including contents to be transmitted and copyright processing information of the contents in pairs. Data holding unit 8011 is a medium capable of storing data in a hard disk, a CD-ROM, or a semiconductor memory.

Data transmitting unit 8012 transmits the contents held in data holding unit 8011 and the copyright processing information of the contents in pairs. Data transmitting unit 8012 is formed of a modem or a driver, for example. Data transmitting unit 8012 may be formed of an existing data broadcasting means.

Receiver 802 has first tuner 8021, second tuner 8022, content storing unit 8023, command reception unit 201, copyright information acquiring unit 202, judgment unit 203, recording method decision unit 204, content holding unit 205, content acquiring unit 206, and content recording unit 207.

First tuner 8021 and second tuner 8022 receive a broadcast (the transmitter is hereinafter described as a broadcasting apparatus). Received broadcast wave has pairs of contents and the copyright processing information of the contents.

First tuner 8021 is connected to command reception unit 201, and second tuner 8022 is not connected to command reception unit 201. In other words, first tuner 8021 can be remotely controlled by a user, but second tuner 8022 cannot be controlled by the user.

Content storing unit 8023 stores, into content holding unit 205, pairs of contents and the copyright processing information that are received by first tuner 8021 and second tuner 8022.

A copy flow of a content realized by the transmitting/receiving system is described hereinafter.

Firstly, operations of transmitter 801 are described. Data transmitting unit 8012 extracts the pair data of contents and copyright processing information that is held by data holding unit 8011. Data transmitting unit 8012 then transmits the extracted pair data of contents and copyright processing information.

Next, operations of transmitter 802 are described. First tuner 8021 and second tuner 8022 receive the pair data of contents and copyright processing information transmitted from transmitter 801. Which of first tuner 8021 and second tuner 8022 receives the data is determined based on a command (a command issued by a user with a remote controller) received by command reception unit 201. Here, which of first tuner 8021 and second tuner 8022 receives the data may be previously determined, or may be fixed. In this case, when user uncontrollable second tuner 8022 is assumed to receive the data, the following effect is produced. In other words, a content of which copyright is asserted is always broadcasted and is always received by the receiver, so that a good content is legally delivered.

Content storing unit 8023 then stores pair data of contents and copyright processing information into content holding unit 205.

The above discussion has shown the operations of storing the pair data of contents and copyright processing information in receiver 802.

Receiver 802 then records the contents on the recording medium in response to a command from the user. An operation example at this time has been described in embodiment 1.

Another example is described hereinafter.

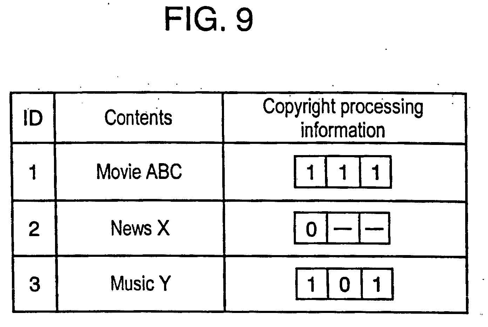

The pair data of contents and copyright processing information shown in Fig. 9 is assumed to be stored in data holding unit 8011 of transmitter 801. The pair data of contents and copyright processing information has corresponding "IDs" used for identifying the data.

The copyright processing information of "ID = 1" is formed of three bits, namely "1", "1", and "1". The first bit "1" indicates that content "movie ABC" is a content of which copyright is asserted. The remaining two bits "1 1" indicate an asserting level of the copyright. When copyright asserting level in a case such as a copy of the content is high, copyright assertion is strong and the fee for the copy or the like is generally high.

Content "news X" of "ID = 2" corresponds to the copyright processing information of which first bit is "0", so that the copyright is not asserted (the copy is charge free and can be performed freely).

The copyright of content "music Y" of "ID = 3" is asserted, and the asserting level thereof is "01". In other words, the copyright asserting level of content "music Y" is lower than that of content "movie ABC", and hence content "music Y" can be generally copied at a low price.

The three contents and the copyright processing information are assumed to be transmitted and stored in content holding unit 205 of the receiver.

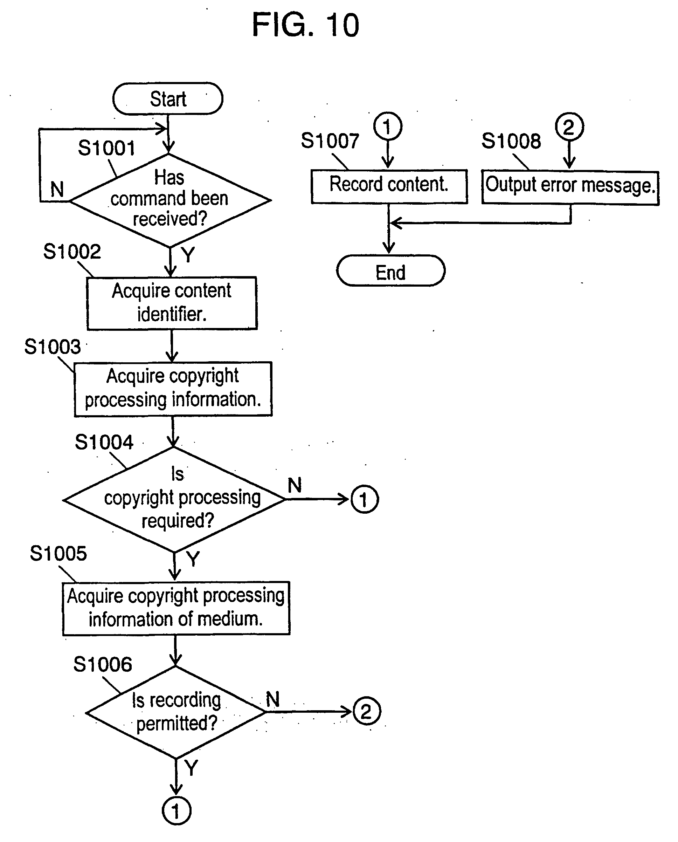

Operations of recording the contents of receiver 802 on the recording medium are described with reference to the flowchart of Fig. 10.
(Step S1001) It is determined whether or not command reception unit 201 has received an input of a content recording command. If command reception unit 201 has received the command, the process goes to step S1002. If command reception unit 201 has not received the command, the process returns to step S1001. The recording command is, "copy content identifier to recording medium identifier" or the like, and includes the content identifier.
(Step S1002) Content acquiring unit 205 acquires the content identifier included in the command.
(Step S1003) Content acquiring unit 205 acquires copyright processing information corresponding to the content identifier from content holding unit 205.
(Step S1004) Content recording unit 207 determines whether or not a content identified by the content identifier requires copyright processing based on copyright processing propriety information. Here, the copyright processing propriety information is included in the copyright processing information acquired in step S1003 and indicates whether or not the copyright processing is performed. If the copyright processing is required, the process goes to step S1005. If the copyright processing is not required, the process jumps to step S1007.
(Step S1005) Content recording unit 207 acquires the copyright processing information of the recording medium identified by the recording medium identifier included in the command. The copyright processing information is previously recorded on the medium, and, for example, includes information indicating whether or not the medium has been copyright-processed and information indicating a level of the copyright processing.
(Step S1006) Content recording unit 207 determines whether or not the content may be recorded based on the copyright processing information acquired in step S1003 and the copyright processing information of the recording medium acquired in step S1005. If the content may be recorded, the process goes to step S1007. If the content is determined not to be recorded, the process jumps to step S1008.
(Step S1007) Content recording unit 207 records the content on the recording medium.
(Step S1008) Content recording unit 207 outputs a previously stored error message.

The general operations of recording a content in receiver 802 have been described.

Next, specific operations are described.

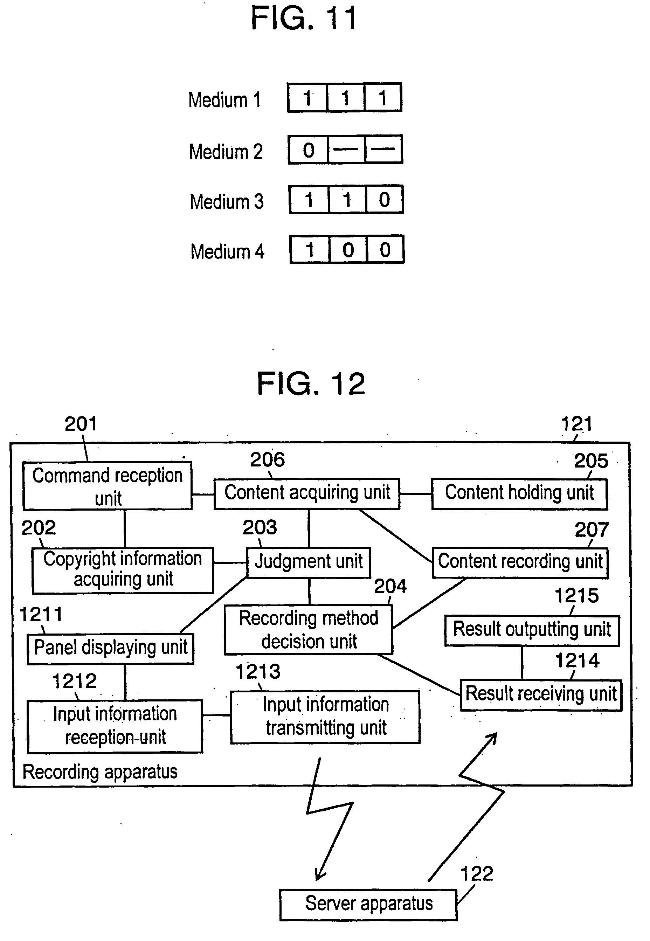

Operations of copying the content shown in Fig. 10 to various recording media having copyright processing information shown in Fig. 11 are described.

The copyright processing information shown in Fig. 11 is formed of three bits. The first bit indicates whether or not the copyright processing content is performed. When the first bit is "1", the copyright processing is performed and a content of which some copyright is asserted can be stored. When the first bit is "0", the copyright processing is not performed and only a content of which copyright is not asserted can be stored.

The next two bits indicate a level of the copyright processing, and it is set that the higher the level is, the more strongly copyright processing is performed, for example (it may set that the lower the level is, the more strongly copyright processing is performed).

The strong copyright processing means that a manufacturer or a seller pays high cost to a copyright group or the like and a content of which copyright is strongly asserted can be also stored.

Fig. 11 considers four recording media.

Medium 1, medium 3, and medium 4 are copyright-processed, because the first bit is "1" in each medium. Medium 2 is not copyright-processed. Therefore, a content of which copyright is asserted can be copied only to medium 1, medium 3, and medium 4. While, only a content such as "news X" of which copyright is not asserted can be copied to medium 2.

The level of copyright processing is "11" in medium 1, "10" in medium 3, or "00" in medium 4.

Now, it is assumed that a content can be recorded only when the certain relation "copyright processing level of recording medium ≥ content copyright assertion level" is established.

In this case, "movie ABC" can be copied only to medium 1, and "music Y" can be copied to medium 1 and medium 3. Since medium 4 has low copyright processing level, medium 4 cannot store a content having high copyright assertion level.

In embodiment 3, as discussed above, the copyright processing of contents can be appropriately performed. Here, the contents have been transmitted (including "broadcasted") by the transmitter for transmitting pairs of contents and copyright processing information and by the transmitting system having the receiver for receiving and recording them on a recording medium.

Especially, considering copyright assertion level of the content and the copyright processing level of the recording medium allows careful copyright processing.

In the case discussed above, it has been assumed that a content can be recorded only when the certain relation "copyright processing level of recording medium ≥ content copyright assertion level" is established. However, it may be assumed that a content can be recorded only when "copyright processing level of recording medium = content copyright assertion level" is established. Additionally, the certain relation means may be varied.

The operations of the transmitter or receiver described in embodiment 3 may be realized by a computer readable program. The program may be delivered in a recorded state on the recording medium such as a CD-ROM, may be delivered by network delivery, or may be delivered in a broadcast.

The copy of the content has been described in embodiment 2; however, similar processing may be performed in moving the content.

### (Exemplary embodiment 4)

Operations of copyright processing using a network after the display of the panel of Fig. 7 are described hereinafter.

Fig. 12 is a block diagram of a configuration of a recording system for performing the copyright processing.

The recording system has recording apparatus 121 and server apparatus 122. The server apparatus performs accounting processing, and hence is called an accounting processor as appropriate.

Recording apparatus 121 records a content. Server apparatus 122 receives information for the copyright processing from recording apparatus 121, performs the copyright processing, and returns the result of the processing to recording apparatus 121. The copyright processing means accounting processing or the like for permitting copy of a content of which copyright is asserted.

Recording apparatus 121 has command reception unit 201, copyright information acquiring unit 202, judgment unit 203, recording method decision unit 204, content holding unit 205, content acquiring unit 206, content recording unit 207, panel displaying unit 1211, input information reception unit 1212, input information transmitting unit 1213, result receiving unit 1214, and result outputting unit 1215.

Panel displaying unit 1211 displays a previously stored panel for the copyright processing when the judgment result of judgment unit 203 indicates nonexistence of copyright processing information. Panel displaying unit 1211 is generally formed of software and a CPU. The information creating the panel is written in hyper text markup language (HTML) for example, and recorded on a recording medium such as a hard disk included in the recording apparatus.

Input information reception unit 1212 receives an input of input information required for the copyright processing when the judgment result of judgment unit 203 indicates nonexistence of copyright processing information. Input information reception unit 1212 is generally formed of software (e.g. a keyboard driver or a mouse driver) and the CPU.

Input information transmitting unit 1213 transmits the input information received by input information reception unit 1212. Input information transmitting unit 1213 is formed of a modem and driver software thereof, for example. The transmission is preferably the network transmission, but may be data transmission by a broadcast such as a cable television (CATV) or a satellite.

Result receiving unit 1214 receives the result of the copyright processing by server apparatus 122. Result receiving unit 1214 generally receives the result through a network, but may receive the result in a broadcast. Result receiving unit 1214 is formed of a modem and driver software or the like thereof.

Result outputting unit 1215 outputs the result received by result receiving unit 1214. Result outputting unit 1215 generally includes a display and can be formed of a display and driver software or the like thereof. The output includes printing or transmission. The transmission means transmission of the result to the other apparatus.

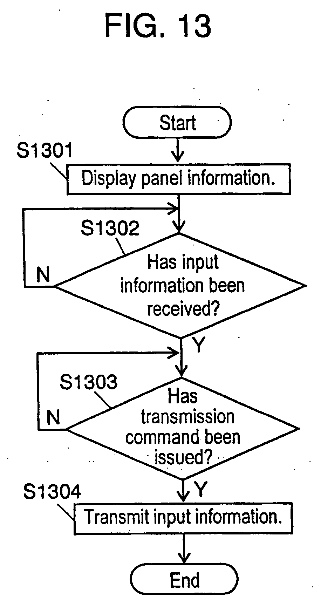

Operations of recording apparatus 121 are described using the flowchart of Fig. 13. The flowchart of Fig. 13 shows processing performed after judgment unit 203 judges that recording cannot be permitted. The judgment processing by judgment unit 203 about whether or not recording is permitted has been described.
(Step S1301) Panel displaying unit 1211 encourages an input of the input information and displays a panel for encouraging transmission of the input information. An example of detail processing of displaying the panel is as follows. Panel displaying unit 1211 reads out panel information (written in HTML, for example) used for creating the panel, interprets and executes the panel information, creates a panel, and outputs the panel to the display.
(Step S1302) Recording apparatus 121 determines whether or not input information reception unit 1212 has received the input information. If input information reception unit 1212 has received the input information, the process goes to step S1303. If input information reception unit 1212 has not received the input information, the process returns to step S1302.
(Step S1303) Recording apparatus 121 determines whether or not input information reception unit 1212 has received a transmission command. If input information reception unit 1212 has received the transmission command, the process goes to step S1304. If input information reception unit 1212 has not received the transmission command, the process returns to step S1303. The transmission command is issued by pushing down a transmission button.
(Step S1304) Input information transmitting unit 1213 transmits the input information.

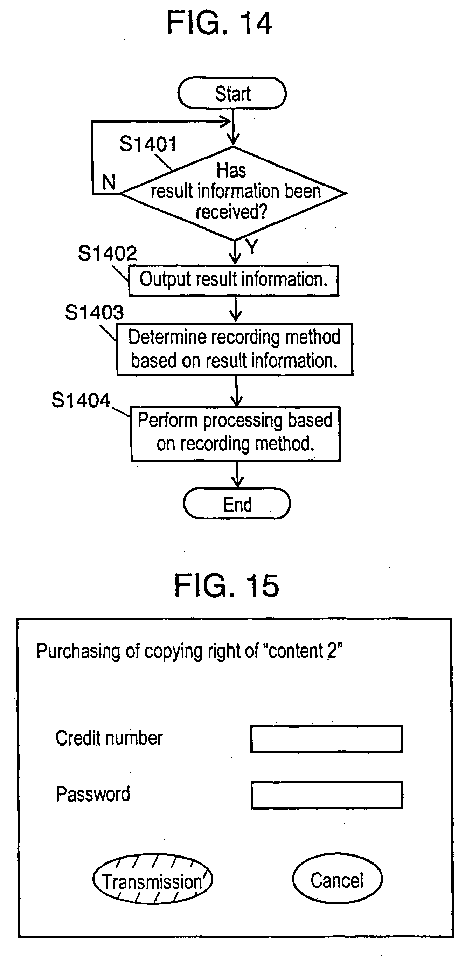

The processing performed until recording apparatus 121 transmits the input information has been described. Operations where recording apparatus 121 receives a processing result of the input information from server apparatus 122 and processes the result are then described with reference to the flowchart of Fig. 14.
(Step S1401) Recording apparatus 121 determines whether or not result receiving unit 1214 has received result information indicating the processing result of the input information from server apparatus 121. If result receiving unit 1214 has received the result information, the process goes to step S1402. If result receiving unit 1214 has not received the result information, the process returns to step S1401.
(Step S1402) Result outputting unit 1215 outputs the result information. The result information is generally output to the display.
(Step S1403) Recording method decision unit 204 determines a recording method based on the result information.
(Step S1404) Content recording unit 207 performs recording processing based on the recording method determined in step S1403. This recording processing includes "nop", namely no operation.

The operations of the copyright processing and content recording of recording apparatus 121 and server apparatus 122 have been described. Specific operations are hereinafter described.

When button "YES" is pushed down in a displayed state of the panel of Fig. 7, the panel shown in Fig. 15 is displayed. When a user inputs appropriate data into the "credit number" field and "password" field in the panel of Fig. 15, the user can purchase the right to copy content 2 by online shopping. Based on these operations, the recording apparatus records content 2 on the recording medium.

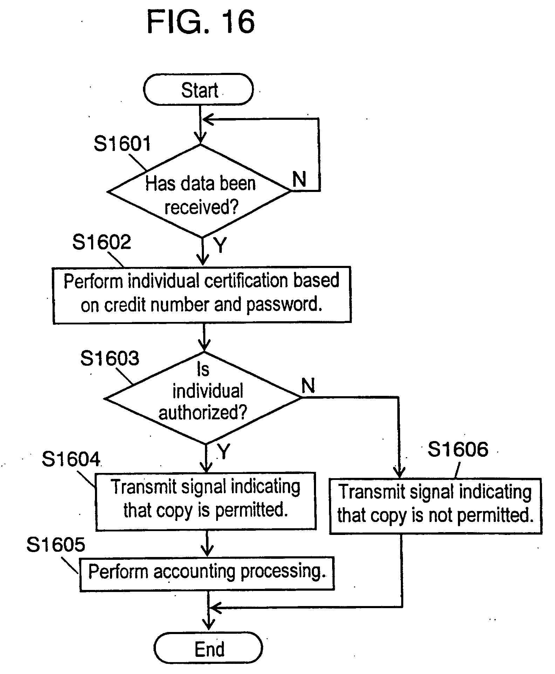

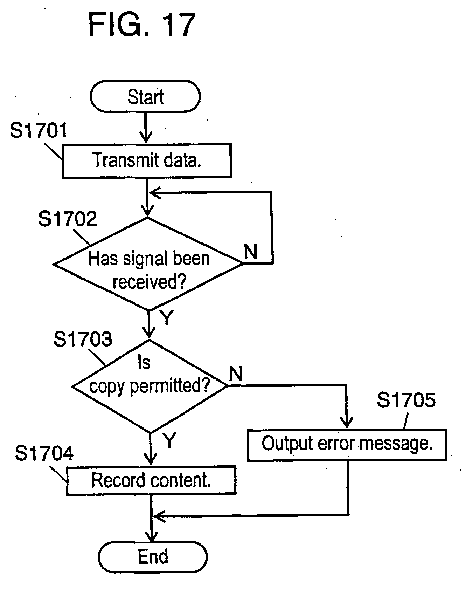

The operations discussed above are specifically realized by communications between the recording apparatus and the server apparatus. The server apparatus performs the operations shown in Fig. 16, and the recording apparatus communicating with the server apparatus performs the operations shown in Fig. 17.
(Step S1601) The server apparatus determines whether or not data including a credit number and a password has been received. If the data has been received, the process goes to step S1602. If the data has not been received, the process returns to step S1601. The data is called input information if necessary.
(Step S1602) The server apparatus performs individual certification by adapting the received data to previously managed individual information.
(Step S1603) The server apparatus determines based on the received data whether or not the user that has transmitted data is a registered and authorized person. If the user is authorized, the process goes to step S1604. If the user is not authorized, the process goes to step S1606.
(Step S1604) The server apparatus transmits a signal indicating that the copy is permitted to the recording apparatus.
(Step S1605) The server apparatus performs accounting processing using the credit number and the like. This accounting processing is normal accounting processing employing a credit card. As a result of the accounting processing, a correct fee is paid to a copyright holder or a copyright managing group.
(Step S1606) The server apparatus transmits a signal indicating that the copy is not permitted to the recording apparatus.

The flowchart (Fig. 17) illustrating the operations of the recording apparatus is described hereinafter.
(Step S1701) The recording apparatus transmits the data including the credit number and the password. The data transmission is realized by pushing down the transmission button.
(Step S1702) The recording apparatus determines whether or not a signal has been received from the server apparatus. If the signal has been received, the process goes to step S1703. If the signal has not been received, the process returns to step S1702.
(Step S1703) The recording apparatus determines whether or not the received signal indicates that the copy is permitted. If the signal indicates that the copy is permitted, the process goes to step S1704. If the signal does not indicate that the copy is permitted, the process goes to step S1705.
(Step S1704) The recording apparatus records a content on the recording medium.
(Step S1705) The recording apparatus outputs an error message indicating that the credit number or the password is incorrect.

In embodiment 4, the processing performed when the copyright processing is insufficient has been described. In this case, the copyright processing is instantly performed using a network or the like, and the content is recorded on the recording medium as it is (this is called confirming processing).

In embodiment 4, the recording method has been determined based on the result information (step S1403 in Fig. 14). The result information is generated by server apparatus 122 based on the input information, so that determination based on the result information is equivalent to determination based on the input information. In other words, the recording method is determined based on the result information and also based on the input information, though there is difference in determination method, namely direct or indirect. Recording apparatus 121 may determine the recording method directly based on the input information without waiting for the result information from server apparatus 122. In this case, the content recording processing can be started without waiting for the transmission of the result information from server apparatus 122, so that the content recording can be advantageously performed at a high speed.

In embodiment 4, panel displaying unit 1211 is not absolutely necessary. Even when the panel is not displayed, it is simply required that the input information is fed and the fed input information is transmitted. The receiving (a result receiving unit) or the output (a result outputting unit) is not absolutely necessary. It is simply required that the recording apparatus determines the recording method based on the input information.

In embodiment 4, an example where the confirming processing is applied to embodiment 1 has been described; however the similar confirming processing can be applied to embodiments 2 and 3. In other words, in embodiments 2 and 3, in a case that the content cannot be recorded as it is, performing the confirming processing allows the entire content to be recorded or the content recordable range to enlarge. Here, this case that the content cannot be recorded as it is includes a case that the content cannot be recorded at all, the content can be recorded only partially, or the content is encrypted and recorded. The enlargement of the content recordable range indicates that the content that could not be recorded at all becomes allowed to be recorded partially.

The confirming processing therefore allows the recording apparatus configuration discussed below.

A recording apparatus for recording a content on a recording medium has the following elements:
a judgment unit for determining whether or not copyright processing information exists on the recording medium;
a content recording unit for recording the content on the recording medium only when existence of the copyright processing information is determined by the judgment unit;
an input information reception unit for receiving an input of input information required for the copyright processing when nonexistence of the copyright processing information is determined by the judgment unit; and
an input information transmitting unit for transmitting the input information received by the input information reception unit.

A recording apparatus for recording a content on a recording medium has the following elements:
an apparatus-side information holding unit for holding copyright processing information;
a medium-side information acquiring unit for acquiring copyright processing information recorded on the recording medium;
a record judgment unit for determining whether or not to record a content based on the copyright processing information held by the apparatus-side information holding unit and the copyright processing information acquired by the medium-side information acquiring unit;
a content recording unit for recording the content on the recording medium only when recording is determined by the record judgment unit;
an input information reception unit for receiving an input of input information required for the copyright processing when no-recording is determined by the record judgment unit; and
an input information transmitting unit for transmitting the input information received by the input information reception unit.

A recording apparatus for recording a content on a recording medium has the following elements:
a judgment unit for determining whether or not copyright processing information exists on the recording medium;
a recording method determining unit for determining a content recording method based on a determination result by the judgment unit;
a content recording unit for recording the content on the recording medium based on the determination by the recording method determining unit;
an input information reception unit for receiving an input of input information required for the copyright processing when nonexistence of the copyright processing information is determined by the judgment unit; and
an input information transmitting unit for transmitting the input information received by the input information reception unit.
The recording method determining unit determines the recording method based on the input information transmitted by the input information transmitting unit.

The operations discussed above (especially, operations described in Fig. 13, Fig. 14, Fig. 16, and Fig. 17) may be realized by computer readable programs. The programs may be distributed in a recorded state on a recording medium such as a CD-ROM, by network delivery, or in a broadcast.

### (Exemplary embodiment 5)

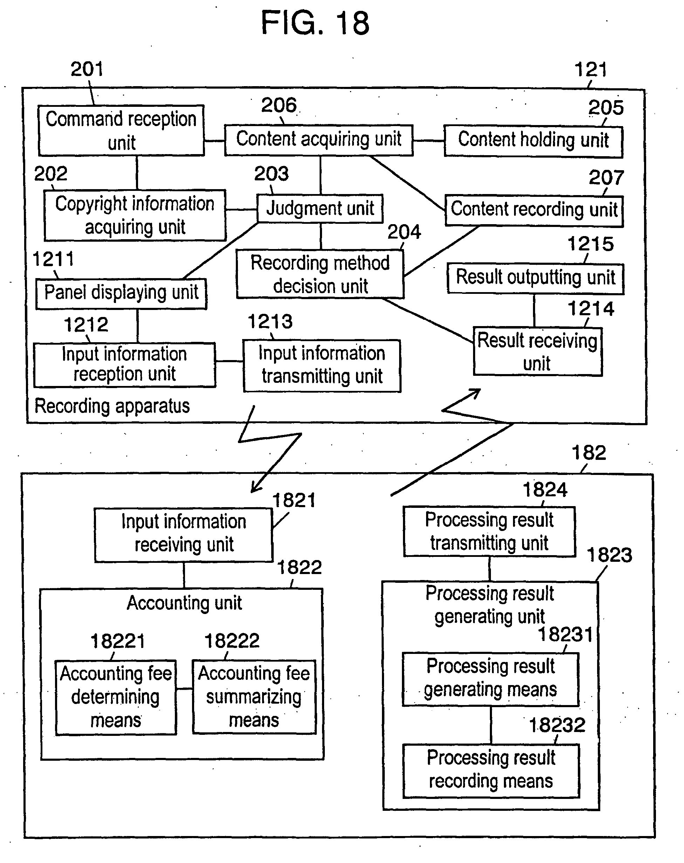

Fig. 18 is a block diagram of a configuration of a recording system in accordance with embodiment 5. The recording system has recording apparatus 121 and accounting processor 182. Recording apparatus 121 has been described. The accounting processor performs the processing similar to that of the server apparatus discussed above, and hence is called a server apparatus as appropriate.

Accounting processor 182 has input information receiving unit 1821, accounting unit 1822, processing result generating unit 1823, and processing result transmitting unit 1824.

Input information receiving unit 1821 receives input information from recording apparatus 121. Input information receiving unit 1821 is formed of a radio or cable communication means, but may be formed of a broadcast receiving means (e.g. a tuner and its driver software).

Accounting unit 1822 performs accounting processing based on the input information received by input information receiving unit 1821. The accounting processing includes the following various kinds of processing, for example. A recording apparatus (or the owner of the recording apparatus) having transmitted the input information is identified and certified, and, when the certification result is appropriate, information used for identifying the recording apparatus and information including a certain accounting fee are transmitted to an apparatus in a bank. In this processing, the accounting fee for the recording apparatus is automatically paid from the bank. When input information includes copyright processing level information, for example, an accounting fee is determined based on the copyright processing level information, and the information used for identifying the recording apparatus (or the owner of the recording apparatus) and the information including the accounting fee are recorded in a pair. When input information includes copyright processing society identifiers, for example, an accounting fee is summarized every copyright processing society identifier, and the summarization result is recorded. Accounting unit 1822 is generally formed of software, but may be formed of a dedicated circuit (hardware).

Accounting unit 1822 includes accounting fee determining means 18221 and accounting fee summarizing means 18222.

Accounting fee determining means 18221 determines an accounting fee based on the input information received by input information receiving unit 1821. The accounting fee is determined by various methods. As an example, a fixed fee (e.g. 100 yen) is set for one piece of input information. As another example, an accounting fee is set dependently on the copyright processing level included in the input information. Accounting fee determining means 18221 is generally formed of software, but may be formed of a dedicated circuit (hardware).

Accounting fee summarizing means 18222, when the input information received by input information receiving unit 1821 includes copyright processing society identifiers, summarizes accounting fee every copyright processing society identifier. Accounting fee summarizing means 18222 is generally formed of software, but may be formed of a dedicated circuit (hardware).

Processing result generating unit 1823 generates result information indicating processing result of the input information received by input information receiving unit 1821. The processing result of the input information corresponds to copyright processing information generated when the input information includes information used for identifying an individual and the individual is found to be authorized by individual certification based on the information. Here, processing result of the input information may be any result if the input information is used for recording a content by the recording apparatus and is processed. Processing result generating unit 1823 is generally formed of software, but may be formed of a dedicated circuit (hardware).

Processing result generating unit 1823 has processing result generating means 18231 and processing result recording means 18232 in embodiment 5. Processing result generating means 18231 is generally formed of software, but may be formed of a dedicated circuit (hardware).

Processing result generating means 18231 generates result information of the processing of accounting unit 1822. Processing result generating means 18231 is generally formed of software, but may be formed of a dedicated circuit (hardware).

Processing result recording means 18232 records the result information generated by processing result generating unit 1823 on a recording medium (not shown).

Processing result transmitting unit 1824 transmits the result information generated by processing result generating unit 1823 to recording apparatus 121. Processing result transmitting unit 1824 is formed of a radio or cable communication means, but may be formed of a broadcasting means.

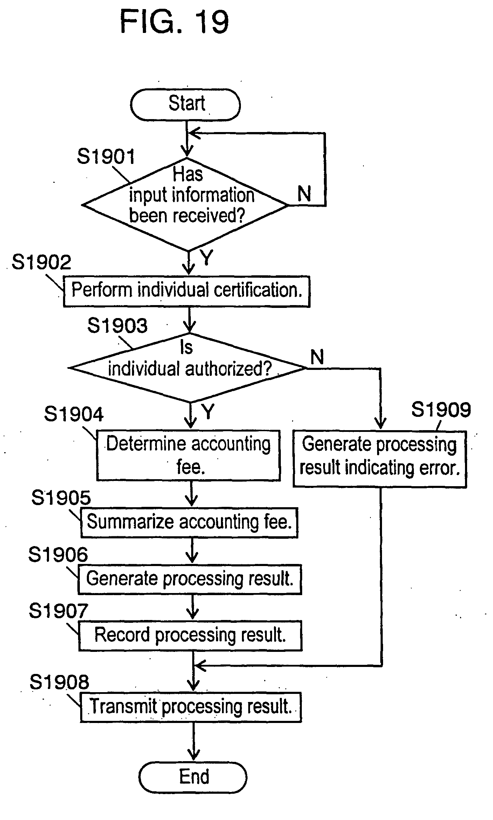

Operations from receiving of input information to transmission of the processing result by accounting processor 182 are described with reference to the flowchart of Fig. 19.
(Step S1901) Accounting processor 182 determines whether or not input information including a credit number and a password has been received. If the input information has been received, the process goes to step S1902. If the input information has not been received, the process returns to step S1901.
(Step S1902) Accounting unit 1822 performs individual certification by adapting the credit number and the password included in the received input information to previously managed individual information.
(Step S1903) Accounting unit 1822 determines based on the received input information whether or not the user that has transmitted the input information is a registered and authorized person. If the user is authorized, the process goes to step S1904. If the user is not authorized, the process jumps to step S1909.
(Step S1904) Accounting fee determining means 18221 determines an accounting fee based on the input information.
(Step S1905) Accounting fee summarizing means 18222 summarizes an accounting fee based on the input information. In other words, when the input information includes copyright processing society identifiers, for example, the accounting fee determined in step S1904 is divided among the copyright processing society identifiers. In this division, a copyright fee to be received by the copyright processing society identified by each copyright processing society identifier is calculated.
(Step S1906) Processing result generating means 18231 generates result information of various processing of accounting unit 1822.
(Step S1907) Processing result recording means 18232 records the result information on a recording medium or the like (not shown). This recording generally means recording on a nonvolatile memory, but may include temporary recording on a volatile memory.
(Step S1908) Processing result transmitting unit 1824 transmits the processing result generated in step S1906 to recording apparatus 121.
(Step S1909) Processing result generating unit 1823 generates error result information indicating a failure of individual certification.

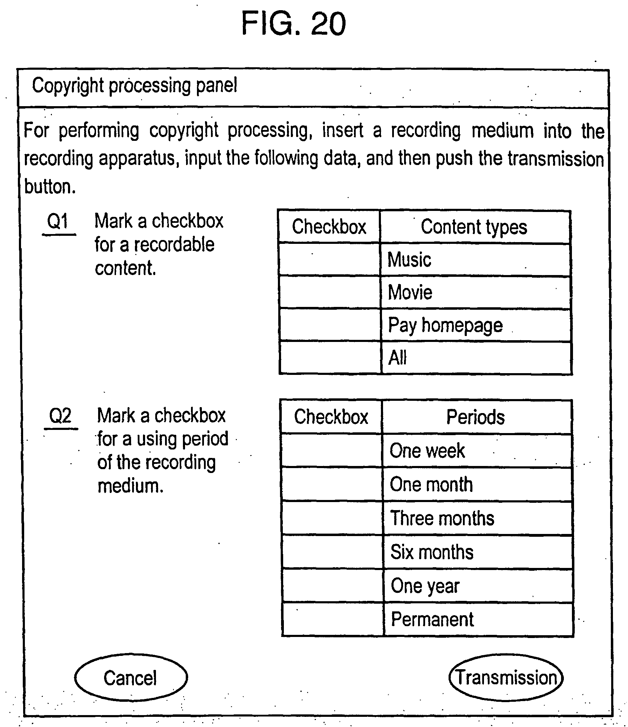

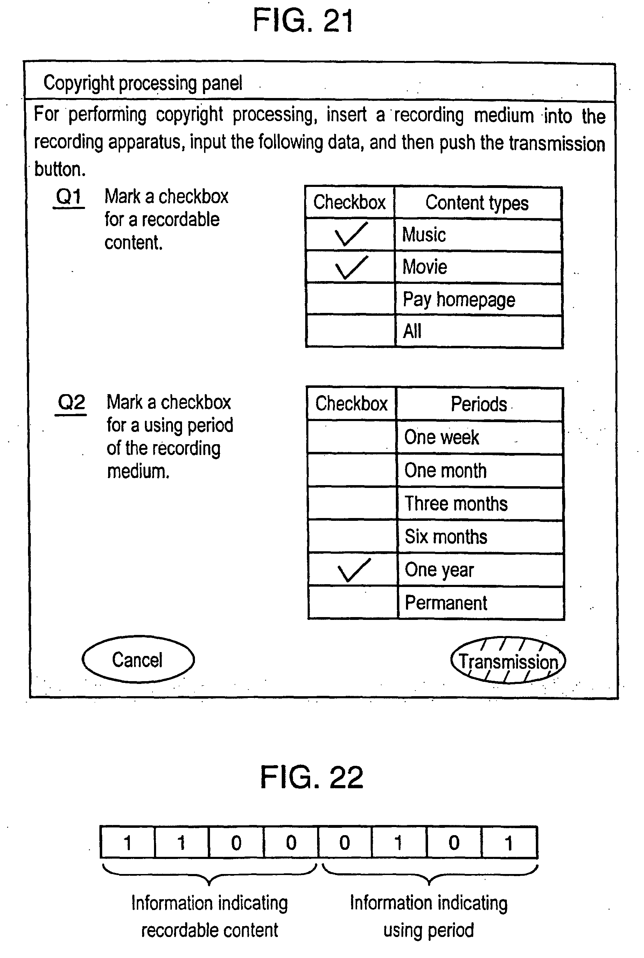

Specific operations of accounting processor 182 are hereinafter described. It is assumed that a panel for copyright processing shown in Fig. 20 is supplied to the recording apparatus. For applying the copyright processing to a recording medium, a user answers the questions "Q1" and "Q2" on the panel of Fig. 20 (inputs information) and then pushes down the transmission button. At this time, input information is generated by the recording apparatus, and then transmitted to the accounting processor. It is now assumed that the information shown in Fig. 21 is input and the transmission button is pushed down. In Fig. 21, the checkboxes of "music" and "movie" are marked in the "content types" column, and the checkbox of "one year" is marked in the "periods" column.

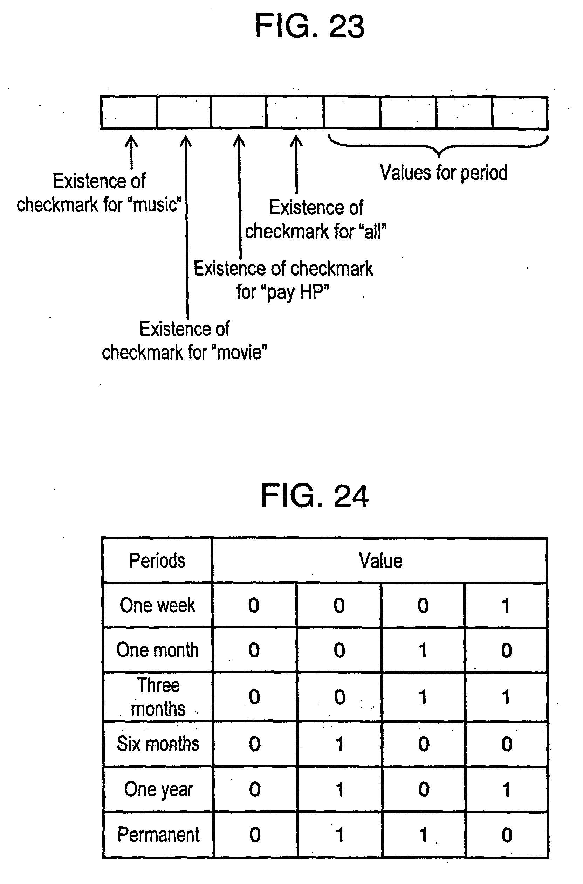

When the information shown in Fig. 21 is input, the input information shown in Fig. 22 is generated by the recording apparatus. The input information shown in Fig. 22 is formed of 8 bits, first 4 bits indicate "recordable content types", and last 4 bits indicate "using period when the recording medium can record the contents". The first 4 bits are specifically described in Fig. 23. The first bit indicates whether or not to permit recording of content type "music". If the first bit is "1", the recording of content type "music" is permitted. If the first bit is "0", the recording of content type "music" is not permitted. The second bit indicates whether or not to permit recording of content type "music". If the second bit is "1", the recording of content type "movie" is permitted. If the second bit is "0", the recording of content type "movie" is not permitted. The third bit indicates whether or not to permit recording of content type "pay homepage (pay HP)". If the third bit is "1", the recording of content type "pay HP" is permitted. If the third bit is "0", the recording of content type "pay HP" is not permitted. The fourth bit indicates whether or not to permit recording of content type "all". If the fourth bit is "1", the recording of content type "all" is permitted and first to third bits of information is neglected.

The last 4 bits are described with reference to Fig. 24. The last 4 bits indicate "using period when the contents of the content types specified by the first 4 bits can be recorded on the recording medium". As shown in Fig. 24, the last 4 bits are "0001" when the using period is "one week", or "0010" when the using period is "one month".

When the information shown in Fig. 21 is input, the input information shown in Fig. 22 is generated and transmitted to the accounting processor.

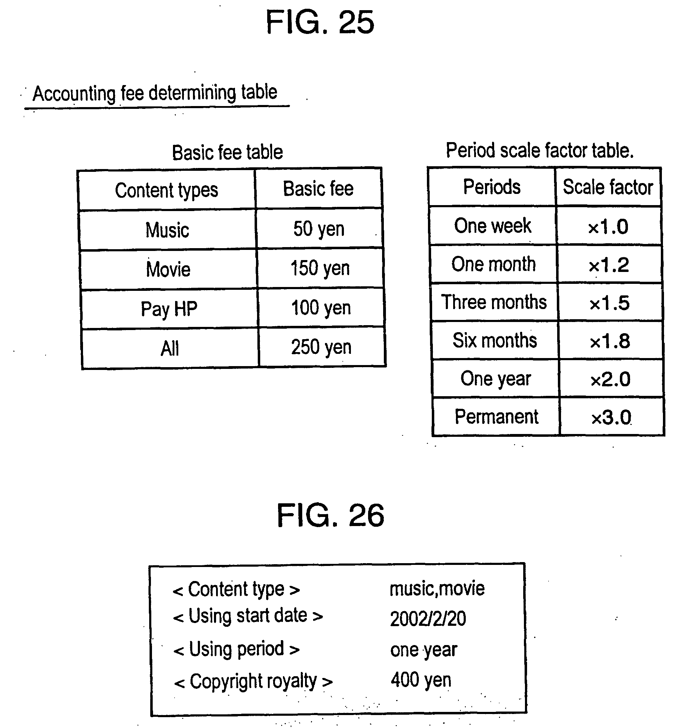

The accounting processor, on receiving the input information shown in Fig. 22, performs the following processing. It is assumed that the accounting fee determining means is holding an accounting fee table of Fig. 25 for determining an accounting fee. The accounting fee table includes a basic fee table and a period scale factor table. The basic fee table is used for managing a basic fee for each content type. The period scale factor table shows a scale factor of the fee for each content type. The accounting fee determining means determines an accounting fee by applying the input information to the basic fee table and the period scale factor table. When the input information of Fig. 22 is transmitted, contents to be recorded are "music" and "movie", and the using period is one year. Therefore, based on basic fee "50 yen" for "music", basic fee "150 yen" for "movie", and period scale factor "2.0", an accounting fee is calculated as (50 yen + 150 yen) × 2.0 = 400 yen.

The accounting fee summarizing means calculates an accounting fee for each copyright processing society based on the input information, and divides the accounting fee, namely 400 yen. Specifically, 100 yen (50 yen × 2.0) for "music" is made to correspond to a music society, and 300 yen (150 yen × 2.0) for "movie" is made to correspond to a movie society. The reason why this processing can be performed is because the accounting fee summarizing means holds society identifiers corresponding to the content types. Based on this correspondence, the accounting fee summarizing means calculates a copyright royalty corresponding to each society identifier. How much copyright royalty is paid to which group may be determined by another algorism. The input information of Fig. 22 does not include any copyright processing society identifier of Fig. 4. When it is considered that information of content types corresponds to copyright processing society identifiers one to one, however, the input information of Fig. 22 is considered to include the copyright processing society identifiers. In other words, in Fig. 22, the content types correspond to copyright processing society identifiers. The copyright processing society identifiers indicate some groups or individuals managing the copyright, and their names are not regarded.

It is considered that no copyright processing level exists in Fig. 22, but the information (8 bits in total) of the content types and the using period can correspond to the copyright processing level of Fig. 4. The copyright processing level indicates which content can be recorded, and its name is not regarded.

In the processing discussed above, the accounting fee summarizing means calculates a copyright royalty provided for each copyright processing society identifier. The accounting fee summarizing means records the copyright royalty provided for each copyright processing society identifier on the recording medium (not shown) in a state where the copyright royalties and copyright processing society identifiers are corresponded to each other.

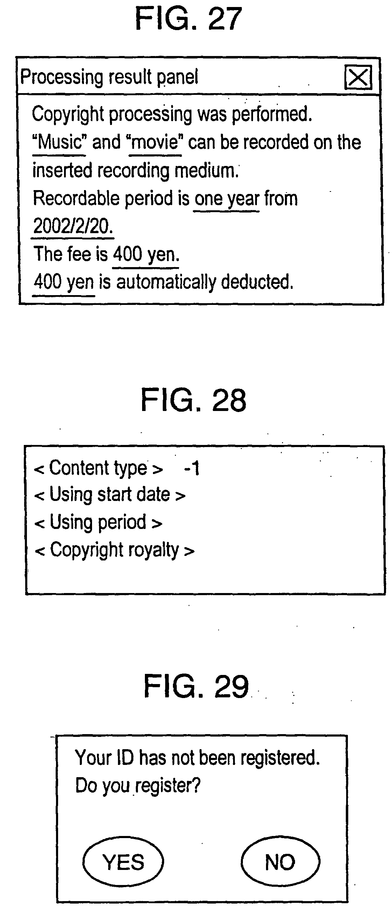

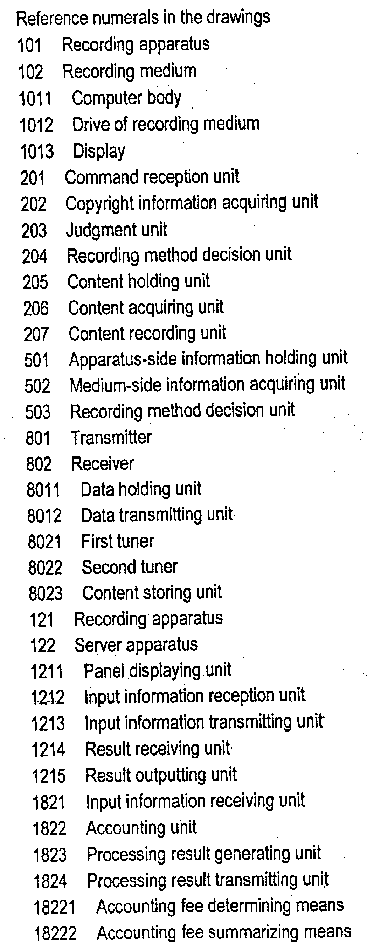

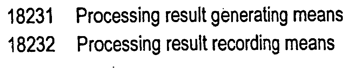

Specific processing of the processing result generating means is described. The processing result generating means, based on the processing discussed above, generates result information shown in Fig. 26, for example. In Fig. 26, recordable content types are "music" and "movie", a start date is "2002/2/20", the using period is "one year", and copyright royalty paid by the user is 400 yen. The processing result transmitting unit transmits the result information of Fig. 26 to the recording apparatus. The recording apparatus interprets the information of Fig. 26 and records the interpreted information as the copyright processing information on the recording medium. The recording apparatus also interprets the information of Fig. 26 and outputs a processing result panel indicating the processing result shown in Fig. 27.

The result information of Fig. 26 may have arbitrary data structure and format. Description of interpreting technology of the information of Fig. 26 is omitted because existing technology such as a normal token analysis or a syntax analysis can be employed.

The processing result generating means generates result information shown in Fig. 28 when the individual certification shown in the flowchart of Fig. 19 results in an error. In Fig. 28, the value corresponding to "content type" is an error code. The processing result transmitting unit transmits the processing result of Fig. 28 to the recording apparatus. The recording apparatus stores a message corresponding to the error code, and displays the error message corresponding to the error code. An example of the error message is shown in Fig. 29. In other words, the message corresponding to error code "-1" is "Your ID has not registered".

In embodiment 5, accounting processing can be performed when the copyright processing is performed. The accounting processing corresponding to the copyright processing level allows appropriate accounting processing. Summarizing the accounting fee for each copyright processing society allows fair copyright processing for each group and contribution to the copyright protection.

In embodiment 5, the accounting fee determining means or the accounting fee summarizing means included in the accounting unit of Fig. 18 is not absolutely required, and the accounting unit is simply required to perform some accounting processing. In other words, this embodiment is just one example. The other embodiments are similarly examples.

The processing result generating means or processing result transmitting unit is not absolutely required in the accounting processor, and the transmission of the processing result to the recording apparatus may be performed by another apparatus.

It goes without saying that the format of the input information is one example, and the present invention is not limited to the structure discussed above.

As discussed above, in the present invention, the copyright processing information is previously recorded on the recording medium and whether or not to copy a content is determined based on the copyright processing information, thereby allowing appropriate copyright protection. The copyright royalty is certainly collected through the manufacturer or the seller of the recording medium and appropriate accounting processing is performed, thereby allowing fair copyright protection.

The present invention provides a method in which copyright processing of literary work is performed not by a delivery company in a delivery process of a digital content but in the other process, and the copyright processing can be performed for enormous numbers of copyright holders.

### INDUSTRIAL APPLICABILITY

The present invention relates to a recording apparatus and recording medium for protecting copyright. The present invention provides the recording apparatus that acquires copyright processing information related to copyright processing recorded on the recording medium and determines whether or not to record a content based on the copyright processing information.

## Claims

1. A recording apparatus for recording a content on a recording medium,
wherein the recording apparatus acquires copyright processing information related to copyright processing recorded on the recording medium and determines whether or not to record the content based on the copyright processing information.

2. A recording apparatus for recording a content on a recording medium, the recording apparatus comprising:
a judgment unit for determining whether or not copyright processing information exists on the recording medium; and
a content recording unit for recording the content on the recording medium only when existence of the copyright processing information is determined by the judgment unit.

3. A recording apparatus for recording a content on a recording medium, the recording apparatus comprising:
an apparatus-side information holding unit for holding copyright processing information;
a medium-side information acquiring unit for acquiring copyright processing information recorded on the recording medium;
a record judgment unit for determining whether or not to record the content based on the copyright processing information held by the apparatus-side information holding unit and the copyright processing information acquired by the medium-side information acquiring unit; and
a content recording unit for recording the content on the recording medium only when recording is determined by the record judgment unit.

4. A recording apparatus according to claim 3,
wherein the record judgment unit determines that the content is recorded only when the copyright processing information held by the apparatus-side information holding unit matches with the copyright processing information acquired by the medium-side information acquiring unit.

5. A recording apparatus for recording a content on a recording medium, the recording apparatus comprising:
a judgment unit for determining whether or not copyright processing information exists on the recording medium;
a recording method determining unit for determining a content recording method based on a determination result by the judgment unit; and
a content recording unit for recording the content on the recording medium based on the determination by the recording method determining unit;

6. A recording apparatus for recording a content on a recording medium, the recording apparatus comprising:
an apparatus-side information holding unit for holding copyright processing information;
a medium-side information acquiring unit for acquiring copyright processing information recorded on the recording medium;
a recording method determining unit for determining a content recording method based on the copyright processing information held by the apparatus-side information holding unit and the copyright processing information acquired by the medium-side information acquiring unit; and
a content recording unit for recording the content on the recording medium based on the determination by the recording method determining unit.

7. A recording apparatus according to claim 5 or claim 6,
wherein the recording method determined by the recording method determining unit comprises a method of recording all data of the content and a method of recording only partial data of the content.

8. A recording apparatus according to claim 5 or claim 6,
wherein the recording method determined by the recording method determining unit comprises a method of recording the content as it is and a method of encrypting and recording the content.

9. A recording apparatus according to claim 2, further comprising:
an input information reception unit for receiving an input of input information required for the copyright processing when nonexistence of the copyright processing information is determined by the judgment unit; and
an input information transmitting unit for transmitting the input information received by the input information reception unit,
wherein the content recording unit recordes the content on the recording medium based on at least one of the input information and result information.

10. A recording apparatus according to claim 3 or claim 4, further comprising:
an input information reception unit for receiving an input of input information required for the copyright processing when non-recording is determined by the record judgment unit; and
an input information transmitting unit for transmitting the input information received by the input information reception unit,
wherein further determination by the record judgment unit is performed based on at least one of the input information and result information.

11. A recording apparatus according to claim 5, further comprising:
an input information reception unit for receiving an input of input information required for the copyright processing when nonexistence of the copyright processing information is determined by the record judgment unit; and
an input information transmitting unit for transmitting the input information received by the input information reception unit,
wherein the recording method determining unit determines a recording method based on at least one of the input information transmitted by the input information transmitting unit and result information.

12. A recording apparatus according to claim 7 or claim 8, further comprising:
an input information reception unit for receiving an input of input information required for the copyright processing when the recording method determining unit determines a certain method other than the method of recording all data of the content as it is; and
an input information transmitting unit for transmitting the input information received by the input information reception unit,
wherein further determination by the recording method determining unit is performed based on the input information.

13. A recording medium on which copyright processing information is previously recorded.

14. A recording medium according to claim 13,
wherein the recording medium is attachable to or detachable from a recording apparatus.

15. A recording medium according to claim 13 or claim 14,
wherein the recording medium is an optical disk, and stores the copyright processing information in a region separated from a region for storing a content.

16. A transmitting method for correspondingly transmitting a content and copyright processing information, the content being to be recorded on the recording medium by the recording apparatus according to one of claim 1 to claim 12, the copyright processing information being related to copyright processing of the content in a pair.

17. A computer readable program for recording a content on a recording medium, the program comprising the steps of:
acquiring copyright processing information related to copyright processing recorded on the recording medium;
determining whether or not to record the content based on the copyright processing information; and
recording the content based on the determination in the step of determining.

18. A computer readable program for recording a content on a recording medium, the program comprising the steps of:
acquiring medium-side copyright processing information recorded on the recording medium; and
recording the content on the recording medium based on previously held copyright processing information and the copyright processing information acquired in the step of acquiring medium-side information.

19. A computer readable program according to claim 17, further comprising the steps of:
receiving an input of input information required for the copyright processing when nonexistence of the copyright processing information is determined in the step of determining; and
transmitting the input information received by the input information reception unit.

20. A transmitter for correspondingly transmitting a content to be recorded on the recording medium by the recording apparatus according to one of claim 1 to claim 12 and copyright processing information related to copyright processing of the content.

21. An accounting processor for receiving input information from the recording apparatus according to one of claim 9 to claim 12 and performing accounting processing, the accounting processor comprising:
an input information receiving unit for receiving the input information; and
an accounting unit for performing accounting processing based on the input information received by the input information receiving unit.

22. An accounting processor according to claim 21, further comprising:
a processing result generating unit for generating result information indicating processing result of the input information received by the input information receiving unit; and
a processing result transmitting unit for transmitting the processing result generated by the processing result generating unit.

23. An accounting processor according to claim 21 or claim 22, wherein
the input information includes copyright processing level information, and
the accounting unit has an accounting fee determining means for determining an accounting fee based on the copyright processing level information.

24. An accounting processor according to one of claim 21 to claim 23,
wherein
the input information includes copyright processing society identifiers, and
the accounting unit has an accounting fee summarizing means for summarizing an accounting fee for each copyright processing society identifier.

25. An accounting processor according to one of claim 22 to claim 24,
wherein the result information includes copyright processing information.
